# EUROPÄISCHE PATENTSCHRIFT

(11) **EP 2 674 683 B1**
(45) Veröffentlichungstag und Bekanntmachung des Hinweises auf die Patenterteilung: **13.03.2019**
(21) Anmeldenummer: 12401256.8
(22) Anmeldetag: 28.12.2012
(51) Int. Cl.: F24D 19/10, G05D 23/19

(54) **Heizungssteuerung**
Heating control
Commande de chauffage

(30) Priorität: 28.02.2012 DE 102012101625
(43) Veröffentlichungstag der Anmeldung: 18.12.2013
(73) Patentinhaber: Kermi GmbH, 94447 Plattling (DE)
(72) Erfinder: Fonfara, Harald, 94551 Lalling (DE)
(74) Vertreter: Mischung, Ralf

(56) Entgegenhaltungen:
- EP-A1- 0 594 886
- EP-A2- 1 564 616
- EP-B1- 0 282 886
- DE-A1- 10 044 734

## Beschreibung

Die vorliegende Erfindung betrifft ein Verfahren und eine Vorrichtung zur Steuerung einer Heizungsanlage, bei der die Betriebskosten minimiert werden sollen.

Verfahren zur Steuerung von Heizungsanlagen sind aus dem Stand der Technik bekannt. Ein bekannter Ansatz zur Reduzierung der Betriebskosten ist dabei, die Vorlauftemperatur, mit der ein Heizmedium einem Heizgerät zugeführt wird, auf ein möglichst niedriges Niveau zu senken, bei dem dennoch ausreichend Wärme über das Heizgerät abgegeben werden kann.

So beschreibt die EP 0 864 955 A1 eine Anordnung und ein Verfahren zur Anpassung der Leistung eines Heizgerätes. Bei diesem Verfahren wird die Heizungsvorlauftemperatur in Abhängigkeit von der Raumtemperatur und gegebenenfalls der Öffnungsstellung der Heizkörperventile optimiert und an den tatsächlichen Wärmebedarf angepasst. Die Annäherung an die optimale Vorlauftemperatur erfolgt dabei schrittweise in zeitlichen Abständen, um anschließend zu überprüfen, ob die Veränderung der Vorlauftemperatur zur gewünschten Erwärmung und insbesondere Abkühlung im überwachten Raum geführt hat. In mehreren derartigen Schritten wird die Vorlauftemperatur also quasi empirisch demjenigen Wert angenähert, der bei einer bevorzugten Öffnungsstellung des zugehörigen Heizkörperventils (70 % bis 80 % Öffnungsgrad) gerade noch für die angestrebte Heizleistung ausreicht. Nachteiligerweise erfolgt die Anpassung der Vorlauftemperatur zeitverzögert, da die Auswirkungen ihrer Veränderung jeweils durch Sensoren ermittelt und einer erneuten Prüfung zugrunde zu legen sind, was durch die Trägheit des Systems erhebliche Zeit beansprucht. Solange die Vorlauftemperatur jedoch ihr Optimum noch nicht erreicht hat, ist damit zwangsläufig ein erhöhter Aufwand an Energie verbunden.

Dokument EP0282886 A2 offenbart den Oberbegriff des Anspruchs 1.

Aufgabe der Erfindung ist es daher, ein Verfahren und eine Vorrichtung anzubieten, mit welcher die Einstellungen der Vorlauftemperatur auf den optimalen Wert ohne zeitliche Verzögerungen, das heißt ohne zwischengeschaltete Überprüfungszyklen eingestellt werden kann.

Die Aufgabe wird gelöst durch ein Verfahren nach Anspruch 1 und eine Vorrichtung nach Anspruch 10.

Der Erfindung liegt der Kerngedanke zugrunde, die für einen veränderten Wärmebedarf optimale Vorlauftemperatur unmittelbar aus den physikalischen Parametern zu bestimmen, welche für das verwendete Heizgerät einen eindeutigen Zusammenhang herstellen zwischen dem Volumenstrom, mit welchem das Heizgerät beaufschlagt wird, der Vorlauftemperatur, mit welcher das Heizmedium in das Heizgerät einströmt und der daraus resultierenden Wärmeleistung, welche das Heizgerät abgibt. Dabei baut das Verfahren auf der Überlegung auf, dass zur Änderung der Wärmeleistung zwar (auch) der Massenstrom durch das Heizgerät mithilfe eines Ventils verändert werden kann, jedoch ergänzend oder bestenfalls alternativ dazu ausschließlich die Vorlauftemperatur angepasst (insbesondere abgesenkt) werden kann.

Entscheidend gegenüber dem vorgenannten Stand der Technik ist dabei die Erkenntnis, dass jeder Wärmeleistung die Kombination eines bestimmten Massenstroms mit einer bestimmten Vorlauftemperatur zugrunde liegt, so dass bei geringerer Vorlauftemperatur mit höherem Massenstrom die gleiche Wärmeleistung zur Verfügung steht wie bei einer bestimmten höheren Vorlauftemperatur und einem genau dieser Vorlauftemperatur zugeordneten geringeren Massenstrom. Daraus folgt, dass - ausgehend von einem festgestellten Änderungsbedarf gegenüber einer aktuellen Wärmeleistung - die neu erforderliche Wärmeleistung auf unterschiedlichen Wegen erreichbar ist, nämlich durch Kombination verschiedener, jeweils auf einer gemeinsamen Wärmeleistungskurve liegender Wertepaare von Vorlauftemperatur einerseits und Massenstrom andererseits.

Unter der bevorzugten Randbedingung, dass für das Regelventil eines Heizgeräts üblicherweise ein optimaler Öffnungsgrad, also ein bevorzugt beizubehaltender Massenstrom zugeordnet ist, soll zur Erzielung der neu ermittelten Wärmeleistung diejenige Vorlauftemperatur einstellbar sein, welche bei im Wesentlichen unverändertem Massenstrom genau zu der neu ermittelten Wärmeleistung führt.

Anders als im Stand der Technik, wo die schrittweise Anpassung der Vorlauftemperatur nur durch zeitaufwändige Überprüfung beziehungsweise Rückkopplung eines Temperatursensors im überwachten Raum erfolgt, gestattet die erfindungsgemäße Vorgehensweise die sofortige Ermittlung des optimalen "Endwertes" der neu einzustellenden Vorlauftemperatur, mit der die gewünschte neue Heizleistung bei vorgegebenem Massenstrom am Heizgerät erreicht werden kann. Durch die Tatsache, dass die neue Vorlauftemperatur unmittelbar eingestellt werden kann, werden die aus dem Stand der Technik bekannten Verluste aufgrund der schrittweisen Anpassung der Vorlauftemperatur vermieden, so dass die Heizungsanlage mit deutlich geringerem energetischem Aufwand betrieben werden kann.

Das erfindungsgemäße Verfahren sieht entsprechend ein Heizgerät vor, dem ein Heizmedium mit einer vorgebbaren Vorlauftemperatur Tᵥ zugeführt wird. Dabei wird der aktuelle Massenstrom ṁ, welcher dem Heizgerät mit einer aktuellen Vorlauftemperatur Tᵥₐ zugeführt wird, ermittelt. Des Weiteren wird ein von der aktuellen Heizleistung abweichender Heizleistungsbedarf ermittelt, der sich beispielsweise aus den Temperaturwerten eines Außenfühlers und eines in der Nähe des Heizgerätes angeordneten Temperatursensors anhand einer vorgebbaren Kurve ergibt. Beispielsweise könnte die Raumtemperatur angesichts einer gestiegenen Außentemperatur als zu hoch festgestellt werden, woraus sich ein neuer (geringerer) Heizleistungsbedarf für das Heizgerät des jeweiligen Raumes ergibt.

Erfindungsgemäß wird dann für diese neue Heizleistung genau dasjenige Wertepaar ermittelt, welches bei im Wesentlichen unverändertem Massenstrom mit der zugehörigen Vorlauftemperatur die neu geforderte Heizleistung erbringt. Unter Berücksichtigung der neu ermittelten Vorlauftemperatur im Sinne einer Soll-Temperatur Tᵥₛ kann sodann die Heizungsanlage für den optimalen Betrieb eingestellt werden, ohne dass dies in einzelnen, zeitlich verzögerten Schritten erfolgen müsste.

Nach einer ersten vorteilhaften Ausführungsform ist dabei vorgesehen, die Temperatur des Vorlaufes Tᵥ auf den neu ermittelten Wert Tᵥₛ einzustellen ohne dabei den Massenstrom zu verändern. Zweckmäßigerweise erfolgt dies insbesondere für den Fall, dass die neu ermittelte Vorlauftemperatur Tᵥₛ niedriger ist als die aktuelle Vorlauftemperatur Tᵥₐ. Während also das den Massenstrom regelnde Ventil des Heizgeräts bevorzugt (und möglichst unverändert) im optimalen Betriebspunkt betrieben wird, kann die für die nun erforderliche Heizleistung dabei benötigte neue Vorlauftemperatur Tᵥₛ ohne weitere Zwischenschritte eingestellt werden um Verluste durch die graduelle Anpassung nach dem Vorbild des Stands der Technik zu vermeiden.

Unter den vorgenannten Umständen kann es dabei zweckmäßig sein, den Massenstrom des Heizgerätes wenigstens vorübergehend zusätzlich zu drosseln, bis sich die neu ermittelte Vorlauftemperatur Tᵥₛ im Zulauf des Heizgerätes eingestellt hat. Dadurch wird eine weitere Erwärmung des Raumes (dessen Temperatur ja abgesenkt werden soll) zweckmäßig vermieden. Wesentlich dabei ist die Erkenntnis, dass aufgrund der Bestimmung der optimalen Vorlauftemperatur Tᵥₛ der Massenstrom später wieder genau auf seinen ursprünglichen (optimalen) Wert angehoben werden kann. Anders als beim Stand der Technik besteht also von vornherein Gewissheit über die optimale Wertepaarung von Massenstrom und Vorlauftemperatur und die vorübergehende Drosselung des Massenstroms erfolgt, im Bewusstsein dessen, dass sie nur temporär und zusätzlich zur Anpassung der Vorlauftemperatur erfolgt im Sinne einer sofortigen Maßnahme gegen die weitere Aufwärmung des Raumes.

Allerdings ist - nach einer weiteren Version des erfindungsgemäßen Verfahrens - auch eine Absenkung der Vorlauftemperatur unter den rechnerisch ermittelten Wert Tᵥₛ denkbar, wobei zur Erzielung der geforderten neuen Heizleistung der Massenstrom am zugehörigen Heizgerät um ein gewisses Maß erhöht wird, also über demjenigen (optimalen) Betriebswert liegt, der der Ermittlung der neuen Vorlauftemperatur Tᵥₛ zugrunde lag. Dadurch kann die neue Vorlauftemperatur Tᵥₛ noch etwas weiter abgesenkt werden, als es der Vorgabe "optimaler Regelbereich des Regelventils" entspricht. Auch für diese Maßnahme ist jedoch die Kenntnis der erfindungsgemäß ermittelten neuen Vorlauftemperatur Tᵥₛ unerlässlich. Zwar muss das dem entsprechenden Heizgerät zugehörige Ventil dadurch etwas weiter geöffnet werden, als es dem optimalen Regelbereich entspricht. Dies kann aber zugunsten der niedrigeren Vorlauftemperatur mit den damit einhergehenden Ersparnissen akzeptiert werden.

Erfindungsgemäß ist das Verfahren für den Fall vorgesehen, in dem mehrere Heizgeräte in verschiedenen Räumen vorgesehen sind, welche alle mit dem gleichen Heizmedium mit gleicher Vorlauftemperatur beaufschlagt werden. Erfindungsgemäß wird dann derjenige Raum für die Bestimmung der neuen Vorlauftemperatur Tᵥₛ ausgewählt, für den die Differenz zwischen aktueller Heizflächenleistung und angestrebter neuer Heizflächenleistung am geringsten ist. Dies bedeutet, dass dieser Raum (unter der Annahme, dass die Temperatur auch dort zu hoch ist und abgesenkt werden soll) für die Ermittlung der neuen, für alle Räume gemeinsamen Vorlauftemperatur Tᵥₛ zugrunde gelegt wird. Andere Räume, deren neue Heizleistungsanforderung stärker von der bisherigen nach unten abweichen, erreichen diese Leistung dann durch Einstellung der Vorlauftemperatur auf Basis des "ungünstigsten" Raumes unter zusätzlicher Drosselung des Massenstromes. Mit anderen Worten: Die neue Vorlauftemperatur Tᵥₛ wird so gewählt, dass die Heizleistung des "ungünstigsten" Raumes gerade durch die Wertepaarung der ermittelten Vorlauftemperatur Tᵥₛ bei optimalem Regeldurchfluss beziehungsweise Massenstrom durch das Ventil des in dem entsprechenden Raum angeordneten Heizgerätes erreicht wird. Die anderen Heizgeräte, für die theoretisch auch eine niedrigere als die ermittelte Vorlauftemperatur Tᵥₛ zur Erzielung der jeweiligen Heizleistung ausreichen würde, werden durch Drosselung des Volumenstroms am jeweiligen Heizgerät auf die entsprechende Leistung gebracht (reduziert).

Die vorgenannte Vorgehensweise berücksichtigt, dass wenigstens für einen (den "ungünstigsten" Raum) die optimale Wertepaarung von Vorlauftemperatur Tᵥₛ und optimalem Massenstrom erreicht werden soll. Denkbar ist es allerdings, unter Berücksichtigung der Anzahl und der Betriebsanforderungen weiterer Heizgeräte einen Kompromiss zu schließen, dergestalt, dass die ermittelte Vorlauftemperatur Tᵥₛ noch um ein definiertes Maß unterschritten wird, um beispielsweise einen Großteil der Heizgeräte nur gering unterhalb des optimalen Volumenstroms zu betreiben, während das für die Ermittlung der Vorlauftemperatur Tᵥₛ verwendete Heizgerät mit einem etwas höheren als dem optimalen Volumenstrom betrieben wird. Hier liegt es im Ermessen des Betreibers, die optimalen Betriebsbedingungen in Kenntnis der theoretisch korrekten Vorlauftemperatur Tᵥₛ zu wählen.

Statt einer gewünschten Absenkung der Heizleistung in einem oder mehreren Räumen kann auch der umgekehrte Bedarf bestehen, die Heizleistung anzuheben. Theoretisch lässt sich hier in analogem Umkehrschluss wieder die erforderliche Vorlauftemperatur bei im Wesentlichen unverändertem Massenstrom ermitteln, um geeignete Einstellungen der Betriebsparameter vornehmen zu können. Während zur Absenkung der Heizleistung die Absenkung der Vorlauftemperatur regelmäßig geboten erscheint, kann für den umgekehrten Fall auch die alleinige Erhöhung des Massenstromes innerhalb vordefinierbarer Grenzen zweckmäßig erscheinen, ohne die Vorlauftemperatur anzuheben. Anhand der rechnerisch ermittelten "optimalen" Vorlauftemperatur Tᵥₛ unter der Annahme des optimalen Massenstroms durch das Heizgerät ist sodann eine Abwägung geboten, ob die alleinige Erhöhung des Massenstroms technisch möglich und wirtschaftlich sinnvoll erscheint, oder ob die Vorlauftemperatur ganz oder vollständig auf den rechnerisch ermittelten Sollwert Tᵥₛ anzuheben ist. Insbesondere für den Fall, dass die erhöhte Heizleistungsanforderung nur vorübergehend zu erwarten ist, kann die ausschließliche Anhebung des Volumenstroms unter Beibehaltung der bisherigen Vorlauftemperatur zweckmäßiger, beziehungsweise wirtschaftlicher sein mit der Maßgabe, dass der maximal durch das Ventil förderbare Volumenstrom die neu geforderte Heizleistung überhaupt zu liefern in der Lage ist. Anderenfalls wird die Erhöhung der Vorlauftemperatur nötig werden, wobei die Auswahl der unterschiedlich möglichen Wertepaarungen (Vorlauftemperatur vs. Massenstrom) unter wirtschaftlichen Gesichtspunkten zu treffen ist. Maßgeblich ist auch hier jedoch in jedem Fall die Kenntnis und Berücksichtigung der idealen Vorlauftemperatur Tᵥₛ zur Bewertung der tatsächlich einzustellenden Betriebsparameter.

Als besonders zweckmäßig hat sich für das erfindungsgemäße Verfahren der Ansatz herausgestellt, eine für erforderlich erkannte Änderung der Vorlauftemperatur unmittelbar, also in einem Schritt oder stufenlos und ohne zeitliche Verzögerung einzustellen. Im Gegensatz zum Stand der Technik, bei dem die schrittweise Annäherung beziehungsweise Anpassung von tatsächlicher zu idealer Vorlauftemperatur mit unnötigen Verlusten und Zeitaufwand verbunden ist, kann die nach Auswertung der Betriebsparameter als optimal ermittelte Vorlauftemperatur Tᵥₛ unmittelbar und ohne unnötige Verzögerungen eingestellt werden. Sie wird also vorteilhaft nicht "empirisch" mittels Rückkopplung von Sensoren überprüft oder ermittelt, sondern aus von vornherein bekannten physikalischen Parametern bestimmt. Entsprechend ist eine verzögerte, kontrollierte Absenkung oder Anhebung der Vorlauftemperatur in einzelnen Teilschritten nicht nötig, wodurch Verluste bei der Änderung der Betriebsparameter vermieden werden. In gleicher Weise gilt dies für den Fall, dass auch oder ausschließlich eine Änderung des Massenstroms beabsichtigt ist. Für eine geänderte Heizleistungsanforderung ergibt sich bei konstant gehaltener Vorlauftemperatur - wie vorstehend erläutert - ein abweichender Massenstrom, der zu genau der geforderten Heizleistung führt. Auch die Änderung des Massenstroms kann daher stufenlos und ohne unnötige Verzögerung erfolgen, um thermische Verluste zu vermeiden. Auch für den Fall, dass eine Kombination von beispielsweise nur leicht abgesenkter Vorlauftemperatur mit entsprechend leicht angehobenem Massenstrom (als Wertepaarung für eine geforderte Heizleistung) gewählt werden soll, können beide Werte unverzüglich eingestellt werden, ohne dass eine Überprüfung des Wärmeverhaltens anhand von Sensoren erforderlich wäre.

Nach einer weiteren vorteilhaften Ausführungsform des Verfahrens ist vorgesehen, dass die angestrebte neue Vorlauftemperatur Tᵥₛ nur dann tatsächlich eingestellt wird, wenn die Differenz zur aktuellen Vorlauftemperatur Tᵥₐ einen vorgebbaren Grenzwert nicht überschreitet. Auf diese Weise sollen Instabilitäten im Regelkreis vermieden werden. Der vorgebbare Grenzwert kann dabei proportional beziehungsweise in Abhängigkeit von der Vorlauftemperatur gebildet werden, so dass beispielsweise bei einer aktuellen Vorlauftemperatur Tᵥₐ von 50 °C eine Änderung um nicht mehr als 5 K erfolgen darf, während bei einer Vorlauftemperatur Tᵥₐ von 30°C ein Limit von 3 K gesetzt werden könnte, also jeweils etwa im Rahmen einer 10%-Grenze.

Nach einer Ausführungsform der Erfindung wird der Massenstrom der einzelnen Heizgeräte unter Berücksichtigung des Ventilhubs der dem jeweiligen Heizgerät zugeordneten Regelventile ermittelt, wobei vom Ventil jeweils ein Signal abgreifbar und auswertbar ist, welches einen Rückschluss auf den aktuellen Massenstrom bzw. Ventilhub zulässt.

Die Bestimmung der "optimalen" Vorlauftemperatur Tᵥₛ aufgrund gegebener Werte für den Massenstrom und die geforderte Heizleistung kann beispielsweise über ein in einer Steuerung numerisch hinterlegtes Heizflächen-Auslegungsdiagramm erfolgen, welches für bestimmte Heizflächenexponenten und Anschlussbedingungen eine eindeutige Beziehung herstellt zwischen Vorlauftemperatur, Massenstrom und Heizleistung eines Heizgerätes.

Das erfindungsgemäße Regelprinzip, welches vorteilhaft für eine Vielzahl von Räumen eines Hauses Anwendung findet, berücksichtigt dabei für jedes Heizgerät eines Raumes den vom Regler ausgegebenen Ventilhub des zugehörigen Stellorganes, um in Kenntnis einer vom aktuellen Zustand abweichenden neuen Heizleistungsforderung die optimierte Vorlauftemperatur Tᵥₛ zu ermitteln und an eine zentrale Regeleinheit zu melden. Der neu ermittelte Wert für die Vorlauftemperatur kann dabei dafür verwendet werden, eine in der zentralen Regeleinheit hinterlegte Heizkurve zu korrigieren, also die Soll-Vorgabe für die Vorlauftemperatur in Abhängigkeit beispielsweise eines Außenfühlers anzupassen.

Zur Durchführung des erfindungsgemäßen Verfahrens ist ein Wärmeerzeuger vorgesehen mit einem Vorlauftemperatursensor, der zur Überwachung der aktuellen Vorlauftemperatur dient. Des Weiteren soll ein Referenzsensor vorgesehen sein, der beispielsweise nach Art eines Außenfühlers auf der Außenseite eines Gebäudes angebracht ist und die aktuelle Wetterlage erfasst. Für jeden zu regelnden Raum soll weiterhin ein zugeordneter Temperatursensor vorgesehen sein, wobei ein in dem jeweiligen Raum vorgesehenes Heizgerät, welches mit einem Heizmedium durchströmbar ist, hinsichtlich seines Massenstromes durch ein zugeordnetes Ventil regelbar ist. Schließlich erfasst die erfindungsgemäße Vorrichtung eine Einheit zur Verarbeitung der Signale, die von den Temperatursensoren und Ventilen bzw. deren Stellorganen bereitgestellt werden.

Eine in der Regelung hinterlegte Software, jedenfalls aber die für die Ermittlung der optimalen Vorlauftemperatur in Abhängigkeit von Massenstrom und Wärmeleistung hinterlegten Wertepaare könnten für die oder in der Einheit zur Signalverarbeitung bereitgestellt sein. Die Ventile der einzelnen Heizgeräte stellen dabei die Einhaltung des Sollwerts der Raumtemperatur mittels Drosselung oder Erhöhung des Massenstroms der Heizgeräte sicher. Ein Regler im Wärmeerzeuger kann dabei anhand eines Auswertealgorithmus, beispielsweise in Form einer Software, die erfindungsgemäß ermittelte korrigierte Vorlauftemperatur zur Korrektur der Heizkurve verwenden, wobei diese Korrektur höher ausfallen kann, als dies aus der Vorgabe des "ungünstigsten" Raumes resultiert.

Das der Erfindung zugrunde liegende Verfahren gestattet außerdem eine besonders vorteilhafte Regelung von Heizgeräten für Räume, in denen die Raumtemperatur beispielsweise temporär um eine bestimmte Differenz (ΔT_{R}) abgesenkt oder angehoben werden soll. Aus dem Stand der Technik ist es bekannt, während der Nacht eine sogenannte Nachtabsenkung zu aktivieren, bei welcher die Vorlauftemperatur gezielt um einen vorab festgesetzten Wert, bspw. um 2 Grad, reduziert wird. Die reduzierte Vorlauftemperatur führt an den Heizgeräten bzw. in den zugeordneten Räumen jedoch zu einer Temperaturänderung, welche meist nicht dem Betrag der Temperaturabsenkung des Vorlaufes entspricht. So wird die Nachtabsenkung um 2°C nicht zu einer Absenkung der Raumtemperatur um genau diese 2 Grad führen, da die "ungeprüfte" Absenkung der Vorlauftemperatur die tatsächliche Heizleistungsabgabe an den einzelnen Heizgeräten unberücksichtigt lässt. Ganz im Gegenteil würden in einem solchen Falle die Raumregler "versuchen" denn Sollwert der Raumtemperatur mit der abgesenkten Vorlauftemperatur zu halten, so dass gar kein Einspareffekt eintritt.

Dagegen gestattet das erfindungsgemäße Verfahren die gezielte und genaue Anpassung der Raumtemperaturen auf das Niveau, welches durch den Betrag der temporären Absenkung eigentlich erzielt werden sollte. Soll beispielsweise für die Nachtstunden die Raumtemperatur von 20 Grad auf 18 Grad abgesenkt werden (Differenzbetrag ΔT_{R} = 2°K), so geschieht dies nach dem Stand der Technik in unzureichender Weise durch Absenkung der Vorlauftemperatur um einen vorab festgelegten Wert, bspw. um diese 2 Grad. Bei Anwendung des erfindungsgemäßen Verfahrens dagegen wird die gewünschte Temperaturänderung für die Raumtemperatur von 2 Grad nicht der Vorlauftemperatur "aufgezwungen". Stattdessen wird die gewünschte Absenkung der Raumtemperatur zunächst an den Regler des betreffenden Raumes gemeldet, woraufhin dieser in erfindungsgemäßer Weise den neuen Heizleistungsbedarf ermittelt, so dass die daraus resultierende neue Vorlauftemperatur eingestellt wird, mit der die gewünschte Änderung der Raumtemperatur dann auch tatsächlich erreicht wird. So ist es denkbar, dass anstelle einer Absenkung der Vorlauftemperatur um 2 Grad die Absenkung der Raumtemperatur um diesen Betrag erreicht werden kann mit einer Absenkung der Vorlauftemperatur um beispielsweise 5 Grad, was die Betriebskosten der Heizung reduziert. Besonders für Nachtabsenkungen oder auch planbare Abwesenheiten eines Bewohners, während derer die Raumtemperaturen gezielt um ein vorgebbares Maß reduziert werden können, eignet sich das erfindungsgemäße Verfahren daher ebenfalls. Dies gilt insbesondere für die Fälle, bei denen die Heizgeräte mittels einer Wärmepumpe betrieben werden.

Nachfolgend soll das erfindungsgemäße Prinzip anhand von Ablaufschemata und einem Regelschema näher erläutert werden. Dabei zeigt
- Fig. 1: den Ablauf einer Heizungssteuerung nach dem Stand der Technik,
- Fig. 2: den Ablauf der erfindungsgemäßen Regelung,
- Fig. 3: den Ablauf der erfindungsgemäßen Regelung mit vorübergehender Temperaturabsenkung und
- Fig. 4: ein Regelschema für eine Heizungsanlage mit drei Räumen.

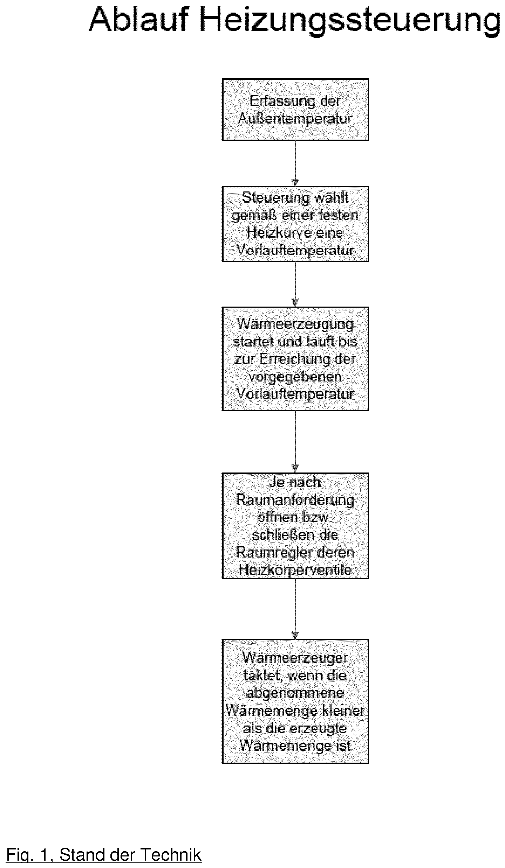

Die aus dem Stand der Technik bekannte Steuerung einer Heizung ist in Fig. 1 dargestellt. Dabei wird in Abhängigkeit einer Referenztemperatur (hier der Außentemperatur) die Vorlauftemperatur nach einer fest hinterlegten Heizkurve eingestellt. Die Wärmeerzeugung läuft bis zum Erreichen der vorgegebenen Vorlauftemperatur. Je nach Heizleistungsanforderung in einem Raum, dessen Heizkörper mit der eingestellten Vorlauftemperatur betrieben wird, öffnen oder schließen die Raumregler die zugehörigen Heizkörperventile, so dass die gewünschte Heizleistung ausschließlich durch Anpassung des Volumenstroms erzielt wird.

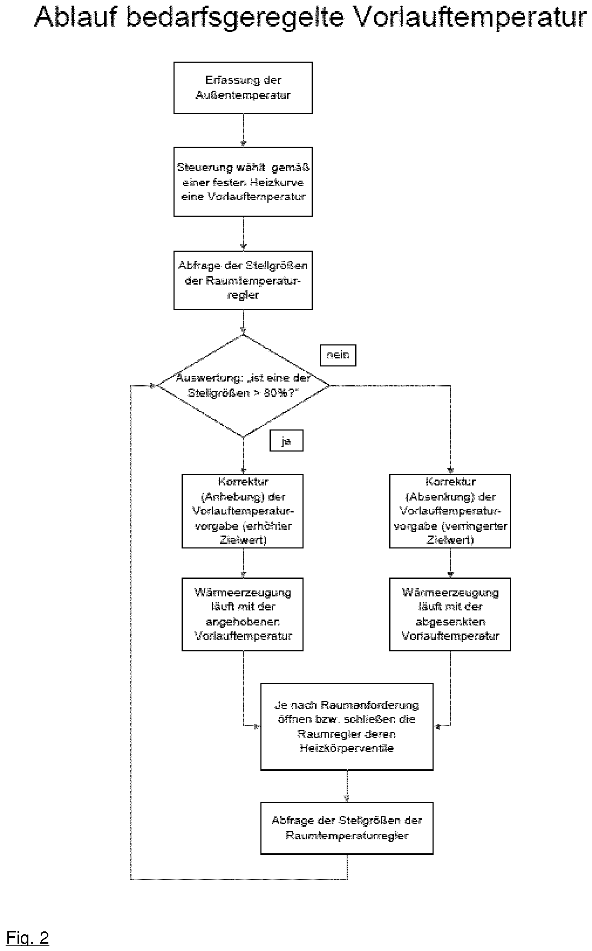

Das erfindungsgemäße Verfahren gemäß Fig. 2 stellt zunächst ebenfalls in Abhängigkeit einer Referenztemperatur (Außentemperatur) gemäß einer hinterlegten Heizkurve eine bestimmte Vorlauftemperatur ein. Anschließend wird festgestellt, ob einer der Heizkörper mit einem oberhalb des optimalen Öffnungsgrads von beispielsweise 80 % betriebenen Regelventil mit dem Heizmedium versorgt wird. Ist dies der Fall, so ergibt sich für eine angestrebte Stellgröße von etwa 80 % ein verändertes Wertepaar Massenstrom/Vorlauftemperatur. Entsprechend wird - um die Stellgröße möglichst auf 80 % regeln zu können - die Vorlauftemperatur angehoben, um insgesamt die gleiche Heizleistung erzielen zu können. Entsprechend kann die Stellgröße bei der neu eingestellten (angehobenen) Vorlauftemperatur auf den idealen Wert von etwa 80 % eingestellt werden.

Stellt sich dagegen heraus, dass das Regelventil zu weniger als 80 % geöffnet ist (also die Vorlauftemperatur mehr Heizleistung bereitstellen könnte bei optimalem Öffnungsgrad), so folgt die Absenkung der Vorlauftemperatur auf denjenigen Wert, der mit dem optimalen Öffnungsgrad (und dem zugehörigen Massenstrom) wieder die gleiche Heizleistung liefert.

Es stellt sich somit eine stabile Regelung der Heizkörper ein unter Vorgabe eines möglichst optimalen Öffnungsgrads der Regelventile von ca. 80 %. Ergibt sich für einen Raum eine Änderung der Heizleistungsanforderung (wenn beispielsweise eine niedrigere Raumtemperatur gewünscht wird) so bewirkt dies zunächst ein Öffnen oder Schließen des zugehörigen Reglers, dessen Öffnungsgrad dann vom Optimum von ca. 80 % abweicht. Als Konsequenz wird die Vorlauftemperatur für denjenigen Fall ermittelt, der bei wieder optimalem Öffnungsgrad von ca. 80 % die nun geänderte geforderte Heizleistung zu verbringen vermag, woraufhin der Regler wieder auf diesen Öffnungsgrad eingestellt werden kann.

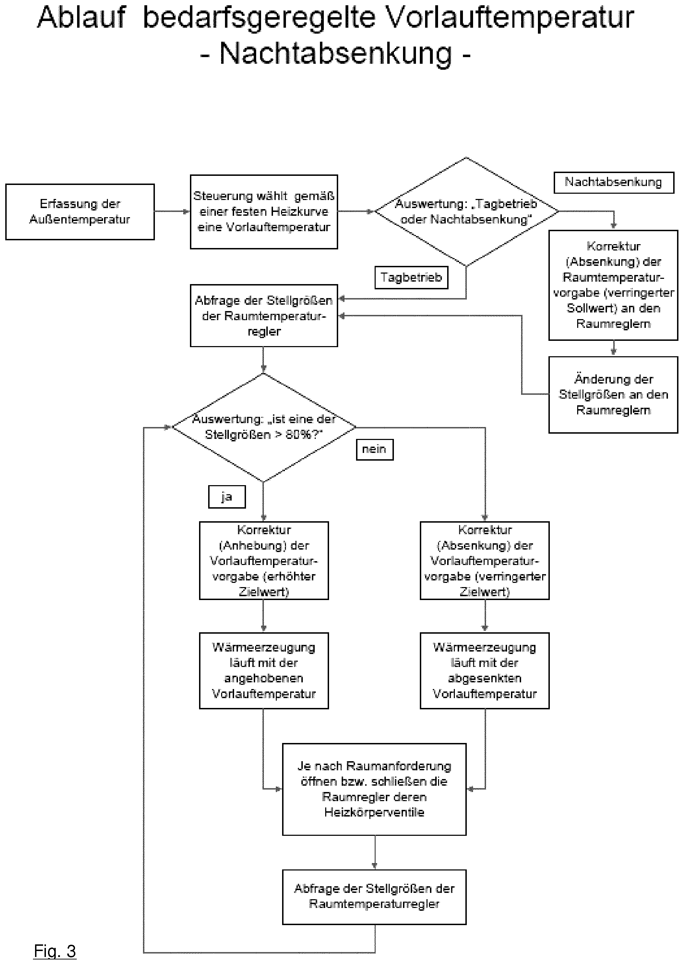

Fig. 3 ist im oberen Teil des Ablaufdiagramms ergänzt um einen Verfahrensschritt, bei dem zwischen Tagbetrieb und Nachtabsenkung unterschieden werden soll. Ergibt die zusätzlich eingeführte Abfrage eine gewünschte Nachtabsenkung (also den Bedarf der Absenkung einer Raumtemperatur auf einen bestimmten tieferen Wert) so ändert sich zunächst der zur Erzielung dieser niedrigeren Temperatur erforderliche Öffnungsgrad am zugehörigen Regelventil. Mit Eintritt in das bereits aus Fig. 2 bekannte Regelschema wird diese Änderung bzw. Abweichung des Öffnungsgrads vom optimalen Wert (80 %) erkannt. Zur Temperaturabsenkung wird der Öffnungsgrad des Regelventils reduziert werden, so dass im weiteren Ablauf der mit "nein" gekennzeichnete Zweig beschritten wird. Entsprechend wird die der neu geforderten Heizleistung zugehörige Vorlauftemperatur für den angestrebten optimalen Öffnungsgrad von 80 % ermittelt und eingestellt, woraufhin der Raumregler wieder auf den optimalen Öffnungsgrad bzw. den für die neue Heizleistung bestimmten Massenstrom eingestellt werden kann. Die für die Nachtabsenkung gewünschte Temperaturabsenkung im Raum von beispielsweise zwei Grad kann daher zu einer vorteilhaften Absenkung der Vorlauftemperatur von deutlich mehr als zwei Grad führen, wodurch eine deutlich wirtschaftlichere Betriebsweise der Heizung erreicht wird.

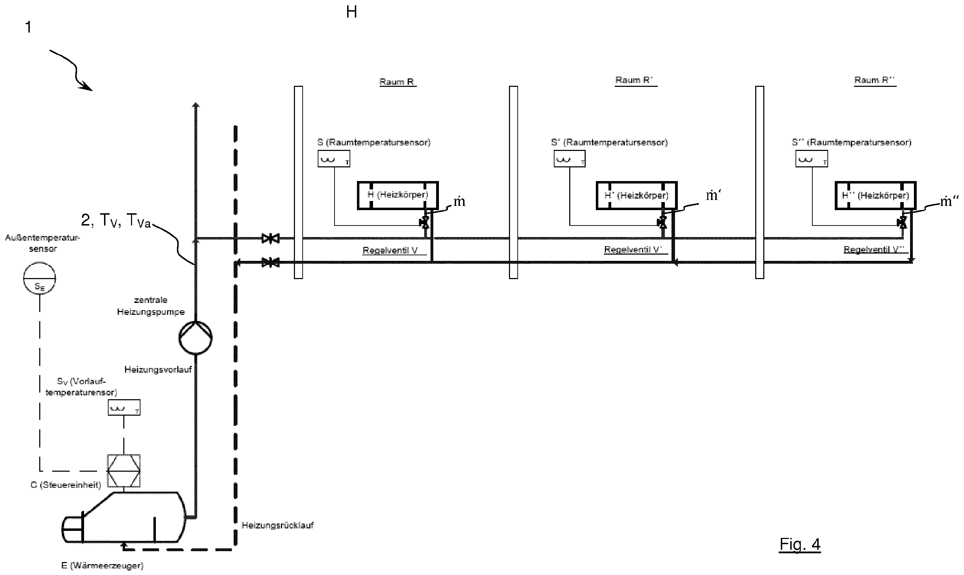

Fig. 4 zeigt ein Schema einer erfindungsgemäßen Heizungsanlage 1. Mit ihr sollen in drei Räumen R, R', R" jeweils zugehörige Heizkörper H, H', H" betrieben werden. Jedem Heizkörper H, H', H" ist dabei ein Regelventil V, V', V" zugeordnet, welches zur Einstellung eines jedem Heizkörper zuzuführenden Massenstromes ṁ, ṁ', ṁ" dient. Weiterhin ist in jedem Raum ein Raumtemperatursensor S, S', S" vorgesehen.

In einem Wärmeerzeuger E wird Heizmedium 2 auf eine Vorlauftemperatur T_{V} aufgeheizt, die als aktuelle Vorlauftemperatur T_{Va} den Heizungsvorlauf bildet. Ein Referenzsensor S_{E}, der als Außentemperatursensor eingesetzt wird, ist mit einer zentralen Steuereinheit C verbunden, die auch die Temperatur des Vorlaufs mittels eines Temperatursensors S_{V} erfasst.

Ändert sich im Raum R (alternativ kann auch der Raum R' oder R" der erfindungsgemäßen Regelung unterworfen werden) der Heizleistungsbedarf von einer aktuellen Heizflächenleistung Q auf eine neu angestrebte Heizflächenleistung Q_{S}, so lässt sich die neue Heizflächenleistung Q_{S} erreichen durch Änderung der Vorlauftemperatur T_{V} und/oder des Massenstroms ṁ. Ist man bestrebt, den Massenstrom ṁ über einen als optimal zugrunde gelegten Öffnungsgrad des zugehörigen Regelventils V einzustellen, so ist diesem Massenstrom ṁ zur Erzielung der neu angeforderten Heizflächenleistung eine bestimmte Solltemperatur T_{Vs} des Vorlaufs zugeordnet, welche über die Steuereinheit C ermittelt und im Wärmeerzeuger E zugleich eingestellt (und über den Vorlauftemperatursensor S_{V} überprüft) werden kann. Mit der so neu eingestellten Solltemperatur T_{Vs} des Heizmediums 2 kann der Heizkörper H im Raum R dann mit dem der Solltemperatur T_{Vs} des Vorlaufs für die geforderte Heizflächenleistung Q_{S} zugeordneten Massenstrom ṁ betrieben werden, der wiederum dem optimalen Öffnungsgrad des Regelventils V zugeordnet ist bzw. daraus resultiert. Heizflächenleistungen Q'_{S} oder Q"_{S} aus den Räumen R' oder R" können durch Anpassung der jeweiligen Massenströme ṁ' bzw. ṁ" entsprechend eingestellt werden. Selbstverständlich kann alternativ auch einer der anderen Räume R' oder R" zur Bestimmung der gemeinsamen Vorlauftemperatur T_{Vs} herangezogen werden, während in den beiden verbleibenden Räumen die dort gewünschte Heizleistung Q durch Kombination der für den einen Raum optimierten Vorlauftemperatur mit dem jeweils erforderlichen Massenstrom eingestellt werden kann.

## Patentansprüche

1. Verfahren zur Steuerung einer Heizungsanlage (1), welche wenigstens einem Heizgerät (H) ein Heizmedium (2) mit einer vorgebbaren Vorlauftemperatur (Tᵥ) zuführt, umfassend folgende Schritte:
a) Ermittlung des aktuellen Massenstroms (ṁ), welcher dem Heizgerät (H) im Raum (R) mit einer aktuellen Vorlauftemperatur (Tᵥₐ) zugeführt wird;
b) Ermittlung einer gewünschten Heizflächenleistung (Qₛ) im Raum (R), in welchem das Heizgerät (H) angeordnet ist;
c) Ermittlung der Vorlauftemperatur (Tᵥₛ), welche bei unverändertem Massenstrom (ṁ) die gewünschte Heizflächenleistung (Qₛ) liefert, um abhängig von der ermittelten Vorlauftemperatur (Tᵥₛ) das Heizverhalten des Heizgeräts (H) zu steuern, **dadurch gekennzeichnet,**
d) **dass** mehrere Heizgeräte (H, H', H"...) in verschiedenen Räumen (R, R', R"...) vorgesehen sind, welche alle mit dem gleichen Heizmedium (2) mit gleicher Vorlauftemperatur (Tᵥ) beaufschlagt werden, und dass die Ermittlung der neuen Vorlauftemperatur (Tᵥₛ) anhand desjenigen Raumes (R, R', R"...) erfolgt, für den die Differenz zwischen aktueller Heizflächenleistung (Q, Q', Q"...) und angestrebter neuer Heizflächenleistung (Qₛ, Q'ₛ, Q"ₛ...) am geringsten ist.

2. Verfahren nach Anspruch 1, **dadurch gekennzeichnet, dass** (Tᵥₛ) ≠ (Tᵥₐ) ist und die Temperatur des Vorlaufes (Tᵥ) auf den neuen Wert (Tᵥₛ) eingestellt wird.

3. Verfahren nach einem der vorigen Ansprüche, **dadurch gekennzeichnet, dass** der Massenstrom (ṁ) für das Heizgerät (H) solange gedrosselt wird, bis sich die neue Vorlauftemperatur (Tᵥₛ) im Zulauf des Heizgerätes (H) eingestellt hat.

4. Verfahren nach Anspruch 1, **dadurch gekennzeichnet, dass** der Massenstrom (ṁ, ṁ', ṁ"...) für die anderen Räume stufenlos um ein individuelles Maß reduziert wird, um die für jeden Raum (R, R', R"...) angestrebte Heizflächenleistung (Q, Q', Q"...) zu erzielen.

5. Verfahren nach einem der vorigen Ansprüche, wobei (Tᵥₛ) > (Tᵥₐ), **dadurch gekennzeichnet, dass** ermittelt wird, ob die gewünschte neue Heizflächenleistung (Qₛ) ausschließlich durch Erhöhung des Massenstroms (ṁ) auf einen neuen Massenstrom (ṁₛ) erreicht werden kann, wobei in diesem Fall der neue Massenstrom (ṁₛ) - vorzugsweise stufenlos - eingestellt wird.

6. Verfahren nach einem der vorigen Ansprüche, wobei (Tᵥₛ) < (Tᵥₐ), und wobei zur Absenkung einer Raumtemperatur eines Raumes (R) um einen Differenzbetrag (ΔT_{R}) dieser Betrag (ΔT_{R}) zur Ermittlung der zu seiner Erzielung erforderlichen neuen Heizflächenleistung (Qₛ) bei vorzugsweise unverändertem Massenstrom (ṁ) herangezogen wird, um daraus die erforderliche Vorlauftemperatur (Tᵥₛ) zu ermitteln und bereitzustellen.

7. Verfahren nach dem vorhergehenden Anspruch, **dadurch gekennzeichnet, dass** der Differenzbetrag (ΔT_{R}) in einer mit einem Wärmeerzeuger (E) gekoppelten Steuerung (C) hinterlegt ist und zur wiederholten temporären Absenkung, insbesondere Nachtabsenkung, an einen das betreffende Heizgerät im Raum (R) regelnden Regler übermittelt wird, wonach dieser die Ermittlung der erforderlichen Vorlauftemperatur (Tᵥₛ) eigenständig oder mittels einer zentralen Steuereinheit vornimmt und den ermittelten Wert (Tᵥₛ) dem Wärmeerzeuger (E) oder einer diesen steuernden Steuerung übermittelt.

8. Verfahren nach einem der vorigen Ansprüche, **dadurch gekennzeichnet, dass** im Fall einer erforderlichen Veränderung der Vorlauftemperatur auf einen neuen Wert (Tᵥₛ) die Einstellung dieser neuen Vorlauftemperatur (Tᵥₛ) stufenlos erfolgt.

9. Verfahren nach einem der vorigen Ansprüche, **dadurch gekennzeichnet, dass** die angestrebte neue Vorlauftemperatur (Tᵥₛ) nur dann eingestellt wird, wenn die Differenz zur aktuellen Vorlauftemperatur (Tᵥₐ) einen vorgebbaren Grenzwert (ΔTᵥ) nicht überschreitet, andernfalls bestimmt der Grenzwert (ΔTᵥ) die maximale Änderung gegenüber der aktuellen Vorlauftemperatur (Tᵥₐ).

10. Verfahren nach einem der vorigen Ansprüche, **dadurch gekennzeichnet, dass** der Massenstrom (ṁ, ṁ', ṁ"...) unter Berücksichtigung des Ventilhubs eines dem jeweiligen Heizgerät (H, H', H"...) zugeordneten Regelventils (V, V', V"...) ermittelt wird.

11. Vorrichtung zur Durchführung des Verfahrens nach einem der vorigen Ansprüche, umfassend
a) einen Wärmeerzeuger (E) mit einem Vorlauftemperatursensor (S_{V});
b) einen beispielsweise nach Art eines Außenfühlers ausgebildeten Referenzsensor (S_{E});
c) wenigstens einen, jeweils einem Raum (R, R', R"...) zugeordneten Temperatursensor (S, S', S"...),
d) Mittel zur Ermittlung des Massenstroms (ṁ)
e) ein jedem Heizgerät (H, H', H"...) zugeordnetes Ventil (V, V', V"...) zur Regelung des Massenstromes (ṁ, ṁ', ṁ"...) und
f) eine Steuereinheit (C) zur Verarbeitung von Signalen, welche ihr von den Komponenten gemäß a) bis c) zugeführt werden,
**dadurch gekennzeichnet,**
**dass** die Steuereinheit (C) programmiert ist zur Durchführung des Verfahrens nach einem der vorigen Ansprüche, und
g) **dass** die Steuereinheit unter Berücksichtigung der ihr zur Verfügung gestellten Daten zur Ermittlung einer tatsächlich erforderlichen Heizflächenleistung (Qₛ, Q'ₛ, Q"ₛ...) zur sofortigen Bestimmung derjenigen Vorlauftemperatur (Tᵥₛ) ausgebildet ist, welche bei für wenigstens einen Raum (R, R', R"...) unverändertem Massenstrom (ṁ, ṁ', ṁ"...) die ermittelte Heizflächenleistung (Qₛ, Q'ₛ, Q"ₛ...) liefert.

## Claims

1. A method for controlling a heating installation (1) which supplies a heating medium (2) with a predeterminable flow temperature (Tᵥ) to at least one heater (H), comprising the following steps:
a) determination of the current mass flow (ṁ) which is supplied to the heater (H) in the room (R) with a current flow temperature (Tᵥₐ);
b) determination of a desired heating surface capacity (Qₛ) in the room (R), in which the heater (H) is arranged;
c) determination of the flow temperature (Tᵥₛ), which, given an unchanged mass flow (ṁ), delivers the desired heating surface capacity (Qₛ) in order to control the heating performance of the heater (H) as a function of the determined flow temperature (Tᵥₛ),
**characterised in that**
d) a plurality of heaters (H, H', H"...) are provided in various rooms (R, R', R"...), to all of which the same heating medium (2) with the same flow temperature (Tᵥ) is applied, and **in that** the new flow temperature (Tᵥₛ) is determined on the basis of that room (R, R', R"...) for which the difference between the current heating surface capacity (Q, Q', Q"...) and the new heating surface capacity (Qₛ, Q'ₛ, Q"ₛ...) striven for is the smallest.

2. A method according to claim 1, **characterised in that** (Tᵥₛ) ≠ (Tᵥₐ), and the temperature of the flow (Tᵥ) is adjusted to the new value (Tᵥₛ).

3. A method according to one of the previous claims, **characterised in that** the mass flow (ṁ) for the heater (H) is restricted for so long until the new flow temperature (Tᵥₛ) has set in in the inflow to the heater (H).

4. A method according to claim 1, **characterised in that** the mass flow (ṁ, ṁ', ṁ"...) for the other rooms is reduced steplessly by an individual measure in order to attain the heating surface capacity (Q, Q', Q"...) striven for for each room (R, R', R"...).

5. A method according to one of the previous claims, wherein (Tᵥₛ) > (Tᵥₐ), **characterised in that** it is determined whether the desired new heating surface capacity (Qₛ) can be achieved exclusively by increasing the mass flow (ṁ) to a new mass flow (ṁₛ), wherein in this case the new mass flow (ṁₛ) is adjusted - preferably steplessly.

6. A method according to one of the previous claims, wherein (Tᵥₛ) < (Tᵥₐ), and wherein for the lowering of a room temperature of a room (R) by a differential amount (ΔT_{R}) this amount (ΔT_{R}) is used to determine the new heating surface capacity (Qₛ) required for the attainment thereof with mass flow (ṁ) preferably unchanged in order to determine and provide the required flow temperature (Tᵥₛ) therefrom.

7. A method according to the preceding claim, **characterised in that** the differential amount (ΔT_{R}) is stored in a control (C) coupled to a heat-generator (E) and, for repeat temporary lowering, in particular lowering at night, is conveyed to a regulator regulating the relevant heater in the room (R), whereupon the regulator independently or by means of a central control unit determines the required flow temperature (Tᵥₛ) and conveys the determined value (Tᵥₛ) to the heat-generator (E) or to a control controlling the latter.

8. A method according to one of the previous claims, **characterised in that** in the event of a required change in the flow temperature to a new value (Tᵥₛ) the adjustment of this new flow temperature (Tᵥₛ) is effected steplessly.

9. A method according to one of the previous claims, **characterised in that** the new flow temperature (Tᵥₛ) striven for is only adjusted when the difference with respect to the current flow temperature (Tᵥₐ) does not exceed a predeterminable limit value (ΔTᵥ); otherwise, the limit value (ΔTᵥ) establishes the maximum change with respect to the current flow temperature (Tᵥₐ).

10. A method according to one of the previous claims, **characterised in that** the mass flow (ṁ, ṁ', ṁ"...) is determined in consideration of the valve lift of a regulating valve (V, V', V"...) associated with the respective heater (H, H', H"...).

11. A device for carrying out the method according to one of the previous claims, comprising
a) a heat-generator (E) having a flow-temperature sensor (Sᵥ);
b) a reference sensor (S_{E}) formed, for example, in the manner of an external sensor;
c) at least one temperature sensor (S, S', S"...) associated respectively with a room (R, R', R"...),
d) means for determining the mass flow (ṁ),
e) a valve (V, V', V"...) associated with each heater (H, H', H"...) for regulating the mass flow (ṁ, ṁ', ṁ"...), and
f) a control unit (C) for processing signals which are supplied to it by the components in accordance with a) to c),
**characterised in that**
the control unit (C) is programmed to carry out the method according to one of the previous claims, and
g) the control unit is formed in consideration of the data made available to it for the determination of a heating surface capacity (Qₛ, Q'ₛ, Q"ₛ...) that is actually required for the immediate establishment of that flow temperature (Tᵥₛ) which with mass flow (ṁ, ṁ', ṁ"...) unchanged for at least one room (R, R', R"...) delivers the determined heating surface capacity (Qₛ, Q'ₛ, Q"ₛ...).

## Revendications

1. Procédé servant à commander une installation de chauffage (1), laquelle amène à au moins un appareil chauffant (H) un milieu chauffant (2) à une température de départ (Tᵥ) pouvant être spécifiée, comprenant des étapes suivantes de :
a) détermination du flux massique (ṁ) instantané, lequel est amené à l'appareil chauffant (H) dans la pièce (R) à une température de départ instantanée (Tᵥₐ) ;
b) détermination d'une puissance de surfaces chauffantes (Qₛ) souhaitée dans la pièce (R), dans laquelle l'appareil chauffant (H) est disposé ;
c) détermination de la température de départ (Tᵥₛ), laquelle fournit la puissance de surfaces chauffantes (Qₛ) souhaitée en présence d'un flux massique (ṁ) inchangé pour commander le comportement de chauffage de l'appareil chauffant (H) en fonction de la température de départ (Tᵥₛ) déterminée,
**caractérisé en ce**
d) **que** plusieurs appareils chauffants (H, H', H"...) sont prévus dans différentes pièces (R, R', R",...), lesquels sont tous soumis à l'action du même milieu chauffant (2) à une température de départ (Tᵥ) identique, et que la détermination de la nouvelle température de départ (Tᵥₛ) est effectuée à l'aide de la pièce (R, R', R", ...), pour laquelle précisément la différence entre une puissance de surfaces chauffantes (Q, Q', Q", ...) instantanée et une nouvelle puissance de surfaces chauffantes (Qₛ, Q'ₛ, Q"ₛ, ...) visée est la moins élevée.

2. Procédé selon la revendication 1, **caractérisé en ce que** (Tᵥₛ) ≠ (Tᵥₐ), et la température de départ (Tᵥ) est réglée sur la nouvelle valeur (Tᵥₛ).

3. Procédé selon l'une quelconque des revendications précédentes, **caractérisé en ce que** le flux massique (ṁ) pour l'appareil chauffant (H) est étranglé jusqu'à ce que la nouvelle température de départ (Tᵥₛ) se soit réglée dans le conduit d'arrivée de l'appareil chauffant (H).

4. Procédé selon la revendication 1, **caractérisé en ce que** le flux massique (ṁ, ṁ', ṁ", ...) est réduit pour les autres pièces progressivement d'une grandeur individuelle pour obtenir la puissance de surfaces chauffantes (Q, Q', Q", ...) visée pour chaque pièce (R, R', R", ...).

5. Procédé selon l'une quelconque des revendications précédentes, dans lequel (Tᵥₛ) > (Tᵥₐ), **caractérisé en ce qu'**il est déterminé si la nouvelle puissance de surfaces chauffantes (Qₛ) souhaitée peut être atteinte exclusivement en augmentant le flux massique (ṁ) sur un nouveau flux massique (ṁₛ), dans lequel dans le cas présent le nouveau flux massique (ṁₛ) est réglé - de préférence progressivement.

6. Procédé selon l'une quelconque des revendications précédentes, dans lequel (Tᵥₛ) < (Tᵥₐ) et dans lequel pour baisser une température de pièce d'une pièce (R) d'une valeur différentielle (ΔT_{R}), ladite valeur (ΔT_{R}) est prise en compte pour déterminer la nouvelle puissance de surfaces chauffantes (Qₛ) requises aux fins de son obtention dans le cas d'un flux massique (ṁ) de préférence inchangé pour déterminer et proposer sur cette base la température de départ (Tᵥₛ) requise.

7. Procédé selon la revendication précédente, **caractérisé en ce que** la valeur différentielle (ΔT_{R}) est enregistrée dans une commande (C) couplée à un générateur de chaleur (E) et est transmise à un régulateur régulant l'appareil chauffant concerné dans la pièce (R) aux fins d'une nouvelle baisse temporaire, en particulier une baisse de nuit, ledit régulateur effectuant après quoi la détermination de la température de départ (Tᵥₛ) requise en toute autonomie ou au moyen d'une unité de commande centrale et transmettant la valeur (Tᵥₛ) déterminée au générateur de chaleur (E) ou à une commande commandant ce dernier.

8. Procédé selon l'une quelconque des revendications précédentes, **caractérisé en ce que** dans le cas d'une modification requise de la température de départ sur une nouvelle valeur (Tᵥₛ), le réglage de ladite nouvelle température de départ (Tᵥₛ) est effectué progressivement.

9. Procédé selon l'une quelconque des revendications précédentes, **caractérisé en ce que** la nouvelle température de départ (Tᵥₛ) visée est réglée alors seulement quand la différence par rapport à la température de départ instantanée (Tᵥₐ) ne dépasse pas une valeur limite (ΔTᵥ) pouvant être spécifiée à moins que la valeur limite (ΔTᵥ) définisse la variation maximale par rapport à la température de départ instantanée (Tᵥₐ).

10. Procédé selon l'une quelconque des revendications précédentes, **caractérisé en ce que** le flux massique (ṁ, ṁ', ṁ", ...) est déterminé en tenant compte de la course de soupape d'une soupape de régulation (V, V', V", ...) associée à l'appareil chauffant (H, H', H") respectif.

11. Dispositif servant à mettre en oeuvre le procédé selon l'une quelconque des revendications précédentes, comprenant
a) un générateur de chaleur (E) avec un capteur de température de départ (Sᵥ) ;
b) un capteur de référence (S_{E}) réalisé par exemple à la manière d'une sonde extérieure ;
c) au moins un capteur de température (S, S', S", ...) associé respectivement à une pièce (R, R', R", ...),
d) des moyens servant à déterminer le flux massique (m) ;
e) une soupape (V, V', V") associée à chaque appareil chauffant (H, H', H") servant à réguler le flux massique (ṁ, ṁ', ṁ", ...), et
f) une unité de commande (C) servant à traiter des signaux, qui lui sont amenés par les composants selon a) à c),
**caractérisé en ce**
**que** l'unité de commande (C) est programmée pour mettre en oeuvre le procédé selon l'une quelconque des revendications précédentes, et
g) **que** l'unité de commande est réalisée en tenant compte des données qui lui sont fournies pour déterminer une puissance de surfaces chauffantes (Qₛ, Q'ₛ, Q"ₛ, ...) requise dans les faits pour définir immédiatement la température de départ (Tᵥₛ), qui précisément fournit la puissance de surfaces chauffantes (Qₛ, Q'ₛ, Q"ₛ, ...) déterminée dans le cas d'un flux massique (ṁ, ṁ', ṁ", ...) inchangé pour au moins une pièce (R, R', R", ...).
